(19) Europäisches Patentamt
European Patent Office
Office européen des brevets

(11) Veröffentlichungsnummer: **0 386 542 A2**

(12) **EUROPÄISCHE PATENTANMELDUNG**

(21) Anmeldenummer: **90103500.6**

(51) Int. Cl.[5]: **C08G 65/40**

(22) Anmeldetag: **23.02.90**

(30) Priorität: **08.03.89 DE 3907474**

(43) Veröffentlichungstag der Anmeldung: **12.09.90 Patentblatt 90/37**

(84) Benannte Vertragsstaaten: **DE FR GB IT**

(71) Anmelder: **BAYER AG**

**D-5090 Leverkusen 1 Bayerwerk(DE)**

(72) Erfinder: **Kern, Sabine, Dr.**
**Claudiusstrasse 16**
**D-4130 Moers 1(DE)**
Erfinder: **Genz, Joachim, Dr.**
**Bodelschwinghstrasse 16**
**D-4150 Krefeld(DE)**
Erfinder: **Kleiner, Frank, Dr.**
**Am Sonnenhang 62**
**D-5090 Leverkusen 3(DE)**
Erfinder: **Eckhardt, Volker, Dr.**
**Bodelschwinghstrasse 38**
**D-4150 Krefeld(DE)**
Erfinder: **Idel, Karsten Josef, Dr.**
**Am Schwarzkamp 38**
**D-4150 Krefeld(DE)**

(54) **Verfahren zur Herstellung von aromatischen Polyetherketonen.**

(57) Die Erfindung betrifft ein Verfahren zur Herstellung kristalliner, aromatischer Polyetherketone mit hohem Molekulargewicht, hoher Temperaturbeständigkeit, hoher Beständigkeit gegen die Einwirkung von Chemikalien, sowie guten mechanischen Eigenschaften.

EP 0 386 542 A2

Xerox Copy Centre

## Verfahren zur Herstellung von aromatischen Polyetherketonen

Die Erfindung betrifft ein Verfahren zur Herstellung kristalliner, aromatischer Polyetherketone mit hohem Molekulargewicht, hoher Temperaturbeständigkeit, hoher Beständigkeit gegen die Einwirkung von Chemikalien, sowie guten mechanischen Eigenschaften.

Kristalline, aromatische Polyetherketone sind bekannt. Sie können z.B. durch Umsetzung eines Dialkalimetallsalzes eines Bisphenols, das gegebenenfalls eine Keto-Gruppe enthält, mit einer Dihalogenverbindung in Gegenwart eines aromatischen Sulfons bei 250° C bis 400° C hergestellt werden (US-PS 4 010 147). Ein weiteres Verfahren beruht auf der Umsetzung eines Ketogruppen-haltigen Halogenphenols mit einem Alkalimetall-Carbonat in N-Methylpyrrolidon, einem aliphatischen Sulfon oder einem aromatischen Sulfon bei 200° C bis 400° C (z.B. US-PS 4 113 699).

Um hochmolekulare, kristalline aromatische Polyetherketone herzustellen, ist es notwendig, ein Lösemittel zu verwenden, obwohl die hergestellten kristallinen Polyetherketone sehr schwer löslich sind.

Bei der Herstellung der Polyetherketone müssen zur Erzielung guter Ausbeuten die Lösungsmittel, in denen die Polymerisation durchgeführt wird, bestimmte Eigenschaften aufweisen.

So wird beispielsweise bei Verwendung eines aliphatischen Sulfons als Lösemittel während der Reaktion eine unerwünschte Gelierung des Ansatzes oder Verfärbung beobachtet, da die Reaktion lange Zeit bei sehr hohen Reaktionstemperaturen gehalten werden muß. Werden beispielsweise Benzophenone als Lösemittel verwendet, so können nur Oligomere erhalten werden (US-PS 4 010 147).

Nur spezielle Benzophenone wie Difluorbenzophenon werden zur Herstellung von Polymeren eingesetzt (z.B. EP-A 1 879). Diese sind jedoch teuer und unwirtschaftlich. Chlorierte Verbindungen konnten bislang noch nicht mit befriedigenden Ausbeuten polymerisiert werden.

Aus der DE-A 2 220 079 ist bekannt, aus Dihalogenaromaten und Dihydroxyaromaten in $C_1$-$C_4$-Alkyllactamen als Lösungsmittel in Gegenwart einer Base, vorzugsweise Natriumcarbonat, aromatische Polyetherketone herzustellen. Das Verfahren hat jedoch den Nachteil, daß bei Verwendung von Dichlorketonen kein hinreichend hohes Molekulargewicht der daraus hergestellten Polymeren erreicht wird.

Es wurde nun gefunden, daß bei Verwendung N-alkylierter Caprolactame als Lösemittel und bestimmter Katalysatormischungen zur Herstellung von kristallinen, hochmolekularen aromatischen Polyetherketonen auch Chlorketone verwendet werden können.

Gegenstand der Erfindung ist ein Verfahren zur Herstellung hochmolekularer, kristalliner aromatischer Polyetherketone aus einer aromatischen Dihydroxy-Verbindung und einer aromatischen Dihalogen-Verbindung, welche eine Ketogruppe enthält, dadurch gekennzeichnet, daß N-$C_1$-$C_5$-Caprolactame als Lösungsmittel und ein Gemisch von Alkaliverbindungen, bestehend aus mindestens einem Alkalicarbonat und mindestens einer Verbindung aus der Gruppe der Alkali-Hydroxide, -Hydrogencarbonate, -Fluoride, -Hydride, -Alkoxide (z. B. Methylate, Ethylate) und -Alkylate (z. B. Ethyle, Butyle) verwendet wird.

Zur Herstellung der Polyetherketone können beispielsweise aromatische Dihydroxy-Verbindungen mit freien Hydroxyl-Gruppen mit einer aromatischen Dihalogen-Ketoverbindung in einem N-alkylierten Caprolactam in Gegenwart einer Mischung von Alkaliverbindungen umgesetzt werden (Reaktionstyp 1) oder Monohydroxymonohalogen-Verbindungen mit einer freien Hydroxylgruppe in einem N-alkylierten Caprolactam in Gegenwart einer Mischung von Alkaliverbindungen umgesetzt werden (Reaktionstyp 2) oder Alkalisalze von aromatischen Dihydroxyverbindungen mit aromatischen Dihalogen-Ketoverbindungen in einem N-alkylierten Caprolactam umgesetzt werden (Reaktionstyp 3) oder Alkalisalze einer Monohydroxymonohalogen-Verbindung in einem N-alkylierten Caprolactam umgesetzt werden (Reaktionstyp 4).

Für das erfindungsgemäße Verfahren können als Dihydroxyverbindungen Phenole der Formel (I)

HO - Ar - OH (I),

in welcher

Ar für $C_6$-$C_{30}$-Arylen steht,

eingesetzt werden.

Geeignete aromatische Dihydroxyverbindungen sind bekannt, z.B. einkernige Bisphenole wie Hydrochinon, mehrkernige Dihydroxyverbindungen wie 4,4'-Dihydroxydiphenyl, 2,2-Bis-(4-hydroxyphenyl)propan, Bis-(4-hydroxyphenyl)methan, 4,4'-Dihydroxybenzophenon, 4,4'-Dihydroxydiphenylether, 4,4'-Dihydroxydiphenylsulfid, 1,4-Bis-(4-hydroxybenzoyl)-benzol, 1,3-Bis-(4-hydroxybenzoyl)benzol, sowie deren kernsubstituierten Derivate usw. Sie können allein oder als Gemische eingesetzt werden.

Bevorzugt werden 4,4'-Dihydroxydiphenyl, 4,4'-Dihydroxydiphenylether, Hydrochinon, 4,4'-Dihydroxybenzophenon eingesetzt.

Für das erfindungsgemäße Verfahren können aromatische Dihalogen-Ketoverbindungen der Formel (II)

X - Ar - X (II),

in welcher

Ar für $C_6$-$C_{30}$-Arylen steht, welcher mindestens eine Keto-Gruppe enthält und

X für Halogen wie Cl in ortho- oder para-Position an dem jeweils letzten aromatischen Kern steht,

eingesetzt werden.

Bevorzugte Dihalogen-Ketoverbindungen können durch die Formeln (III), (IV) oder (V)

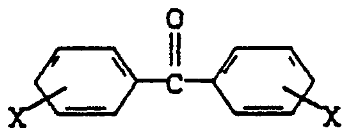

(III),

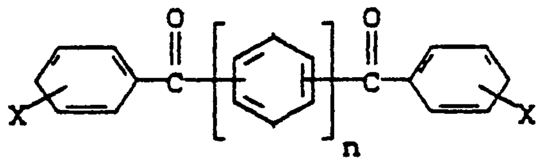

(IV),

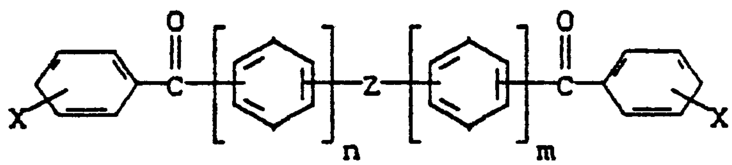

(V),

in welchen

X die bei Formel (II) angegebene Bedeutung hat,

Z für eine Ethergruppe, eine Thioethergruppe, eine Carbonylgruppe oder eine Sulfongruppe steht, und

m und n für die Zahl 1, 2 oder 3 steht,

beschrieben werden.

Erfindungsgemäß geeignete aromatische Dihalogen-Ketoverbindungen sind Dichlorverbindungen, beispielsweise 4,4'-Dichlorbenzophenon, 2,4'-Dichlorbenzophenon, Bis-1,4-(4-chlorbenzoyl)benzol, Bis-1,3-(4-chlorbenzoyl)benzol, Bis-4,4'-(4-chlorbenzoyl)biphenyl und Bis-4,4'-(4-chlorbenzoyl)diphenylether usw. Die Dihalogen-Ketoverbindungen können allein oder als Gemisch eingesetzt werden.

Die Dihalogen-Ketoverbindungen der Formel (II) haben bevorzugt ein Chloratom in para-Position am jeweilig letzten aromatischen Kern.

Mit Chlor substituierte aromatische Dihalogen-Ketoverbindungen sind leichter herstellbar als die sonst verwendeten Difluorverbindungen (wesentlich preisgünstiger) und unter den erfindungsgemäßen Reaktionsbedingungen ausreichend reaktionsfähig.

Besonders bevorzugte aromatische Dihalogen-Ketoverbindungen sind 4,4'-Dichlorbenzophenon und Bis-1,4-(4-chlorbenzoyl )benzol.

Erfindungsgemäß geeignete Monohydroxymonohalogen-Verbindungen können der Formel (VI)

X - Ar - OH (VI),

in welcher

X für Halogen wie Cl steht,

X und OH in ortho- oder para-Position am jeweils letzten aromatischen Rest stehen, und

Ar die bei Formel (II) angegebene Bedeutung hat,

entsprechen.

Anstelle der Verbindungen mit freien Hydroxyl-Gruppen, können ebenso die Alkali-Salze (z.B. Li, Na, K-Salze) der entsprechenden Verbindungen eingesetzt werden.

Bevorzugte Monohydroxymonohalogen-Verbindungen sind beispielsweise, 4-Chlor-4'-hydroxybenzophenon, 4-(4-Chlorbenzoyl)-4'-hydroxybiphenyl, 4-(4-Chlorbenzoyl)-4'-hydroxydiphenylether, 4-Chlor-4''-hydroxyterephthalophenon und 4-Chlor-4''-hydroxyisophthalophenon usw., sowie deren Alkalimetall-Salze.

Die Monohydroxymonohalogen-Verbindungen können allein oder als Mischung eingesetzt werden.

Ihre Alkalimetallsalze können nach den üblichen Verfahren erhalten werden, beispielsweise durch

Umsetzung der Hydroxylverbindungen mit Alkalimetallhydroxiden wie LiOH, NaOH, KOH.

Bevorzugte Monohydroxymonohalogen-Verbindung ist 4-Chlor-4′-hydroxybenzophenon bzw. dessen Alkalisalz (z.B. Na-, K-Salz).

Im erfindungsgemäßen Verfahren wird als Lösemittel vorzugweise N-Methylcaprolactam, N-Ethylcaprolactam, N-n-Propylcaprolactam und N-Isopropylcaprolactam eingesetzt, besonders bevorzugt N-Methylcaprolactam.

Der besondere Vorteil der erfindungsgemäß verwendeten Lösemittel liegt darin, daß sie bei Raumtemperatur flüssig sind und einen sehr hohen Siedepunkt besitzen, thermisch stabil und stark polar sind.

Die erfindungsgemäß verwendeten Lösemittel können allein oder als Gemisch eingesetzt werden. Sie können auch als Mischung mit bisher bekannten Lösemitteln wie Diphenylsulfon oder Benzophenon eingesetzt werden.

Erfindungsgemäß geeignet sind Basenkombinationen (Katalysatormischungen), bestehend aus mindestens einem Alkalicarbonat (z. B. $Li_2CO_3$, $Na_2CO_3$, $K_2CO_3$) und mindestens einer Alkaliverbindung (z. B. Li-Salz, Na-Salz, K-Salz) aus der Gruppe der Alkali-Hydroxide, -Hydrogencarbonate, -Fluoride, -Hydride, $C_1$-$C_{10}$-Alkoxide (z. B. Methylate, Ethylate) und $C_1$-$C_{10}$-Alkylate (z. B. Ethyle, Butyle).

Bevorzugt sind Mischungen von Alkalicarbonat mit Alkali-Hydrogencarbonaten und -Hydroxiden, besonders bevorzugt sind Mischungen von Kaliumcarbonat und Kaliumhydrogencarbonat.

Das Mengenverhältnis vom Alkalicarbonat zu der mitverwendeten Alkaliverbindung beträgt 1 : 99 bis 99 : 1, vorzugsweise 40:60 bis 90:10, besonders bevorzugt 60:40 bis 80:20.

Werden im erfindungsgemäßen Verfahren Monohydroxymonohalogen-Verbindungen der Form (VI) als Alkalisalze eingesetzt, so kann gegebenenfalls die Zugabe des Alkalicarbonats unterbleiben.

Das erfindungsgemäße Verfahren kann wie folgt durchgeführt werden:

Die Reaktionskomponenten werden in Gegenwart der Alkalimetallverbindungen im Lösemittel gelöst und die Reaktionsmischung allmählich auf ca. 120° C bis 200° C aufgeheizt.

Bei dieser Temperatur wird durch ein zugesetztes azoatropes Schleppmittel gebildetes Reaktionswasser entfernt, anschließend das azeotrope Schleppmittel durch Temperaturerhöhung abdestilliert und schließlich wird auf Reaktionstemperaturen von 200° C bis 400° C aufgeheizt und 0,1 bis 24 Stunden, vorzugsweise 0,5 bis 4 Stunden, bei dieser Temperatur gehalten. Für die Erzielung hoher Molekulargewichte werden die aromatischen Dihydroxyverbindungen mit aromatischen Dihalogen-Ketoverbindungen in etwa äquimolaren Mengen miteinander umgesetzt.

Für die wunschgemäße Erreichung gezielt niedrigerer Molekulargewichte kann es zweckmäßig sein, eine der Reaktionskomponenten im Überschuß einzusetzen.

Müssen Alkalisalze zugegeben werden, so werden pro Val Hydroxylgruppen 1,0 bis 2,0 Mol, bevorzugt 1,0 bis 1,5 Mol, besonders bevorzugt 1,21 bis 1,4 Mol, Alkalisalze zugegeben.

Als azeotropes Schleppmittel können Verbindungen eingesetzt werden, die mit Wasser ein Azeotrop bilden und bevorzugt einen niedrigeren Siedepunkt besitzen als das erfindungsgemäße Lösemittel, beispielsweise Benzol, Toluol und Xylol usw., vorzugsweise Toluol.

Erfindungsgemäß wird die Umsetzung bei einer Temperatur von 180° C bis 400° C, bevorzugt von 200° C bis 280° C, durchgeführt.

Erfindungsgemäß werden kristalline, aromatische Polyetherketone mit hohen Molekulargewichten von 1000 bis 500000 ($M_w$) und mit einer relativen Viskosität von 1,5 bis 4,5 (gemessen in Schwefelsäure in einer Konzentration von 1 g/100 ml) erhalten.

Die relative Viskosität kann nach der Formel

$$\eta_{rel} = \frac{\eta}{\eta_0}$$

berechnet werden,

wobei

$\eta_0$ die Viskosität des verwendeten Lösemittels,

$\eta$ die Viskosität der Polymerlösung und

$\eta_{rel}$ die relative Viskosität bedeuten.

Die hochkristallinen, aromatischen Polyetherketone, die nach dem erfindungsgemäßen Verfahren hergestellt wurden, sind unlöslich in üblichen Lösemitteln und besitzen ausgezeichnete thermische Stabilität, Chemikalienresistenz sowie ausgezeichnete mechanische Eigenschaften. Sie können zur Herstellung von Formkörpern, Filmen, Fasern, Oberflächenbeschichtungen usw. verwendet werden. Sie können mit anderen Polymeren abgemischt und verarbeitet werden und mit üblichen Füllstoffen, wie Glasfasern, Kohlefasern, Aramid-Fasern, Calciumcarbonat, Calciumsilicat und üblichen Zusatzstoffen wie Stabilisatoren, Pigmenten, Entformungsmitteln usw. abgemischt werden.

## Beispiele

### Allgemeine Verfahrensvorschrift

### Beispiele 1 - 4 (Reaktionstyp 1):

In einem 3.000 ml Dreihalsrundkolben mit einem Glasrührer und einem Wasserabscheider mit Rückflußkühler und Thermometer werden 1,0 Mol 4,4′-Dichlorbenzophenon, 1,0 Mol der aromatischen Dihydroxyverbindung, 1.200 ml N-Methylcaprolactam, 360 ml Toluol, 1,0 Mol $K_2CO_3$ und 0,3 Mol $KHCO_3$ vorgelegt. Die Reaktionsmischung wird unter Rühren aufgeheizt, bis bei einer Innentemperatur von 200 °C das entstehende Reaktionswasser nach 1 bis 5 Stunden vollständig entfernt ist. Nach Entfernen des Reaktionswassers wird auf ca. 230 °C aufgeheizt und für ca. 9 Stunden weitergerührt.

Zur Koagulation des entstandenen Polymeren wird die noch heiße Reaktionsmischung in einer 10 %igen wäßrigen Phosphorsäurelösung gefällt, anschließend das pulvrig ausgefallene Polymer abfiltriert und mehrmals in Wasser aufgeschlämmt, bis es elektrolytfrei ist. Zur Entfernung eventuell vorhandener Restlösemittelmengen wird anschließend mit Methanol aufgekocht, abfiltriert und getrocknet. Die Ausbeute beträgt mehr als 93 % der Theorie.

Vom getrockneten Produkt wird in 100 %iger Schwefelsäure in einer Konzentration von 1 g/100 ml die relative Viskosität bestimmt.

Mit Hilfe eines DSC-Meßgerätes der Firma Mettler vom Typ "Mettler TA 3000" wurden der Kristallitschmelzpunkt und die zugehörige Schmelzenthalpie als Funktion des Kristallisationsgrades ermittelt.

### Vergleichsbeispiel 1:

Es wird analog zum Beispiel 1 verfahren, aber 1,3 Mol $Na_2CO_3$ als Base eingesetzt.

Vom getrockneten Produkt wird in 100 %iger Schwefelsäure in einer Konzentration von 1g/100ml die relative Viskosität bestimmt. Sie betrug $\eta_{rel}$ = 1,328.

### Beispiel 5 (Reaktionstyp 2):

In einem 3.000 ml Dreihalsrundkolben, versehen mit Glasrührer, Wasserabscheider mit Rückflußkühler und Thermometer werden 2,0 Mol aromatische Monohydroxymonohalogen-Ketoverbindung, 1.200 ml N-Methylcaprolactam, 360 ml Toluol, 1,0 Mol $K_2CO_3$ und 0,3 Mol $KHCO_3$ vorgelegt. Das Reaktionsverfahren läuft analog zum Reaktionstyp 1 ab.

### Beispiele 6 und 7 (Reaktionstypen 3 und 4):

Anstelle der Reaktionskomponenten der Reaktionstypen 1 und 2 werden statt der Verbindungen mit freien Hydroxylgruppen die entsprechenden Alkalimetallsalze (Kaliumphenolate sowie zusätzlich 0,3 Mol $KHCO_3$) vorgelegt und analog Verfahren wie unter Reaktionstyp 1 beschrieben.

In der Tabelle 1 sind die hergestellten Polymeren zusammengestellt.

Tabelle 1

| Beispiel Nr. | Reaktionskomponenten | gebildete Polymerstruktur | rel. Viskosität | Schmelzpunkt °C | Schmelzenthalpie J/g | Farbe des Produktes |
|---|---|---|---|---|---|---|
| 1 | 4,4'-Dichlorbenzophenon<br>Hydrochinon | 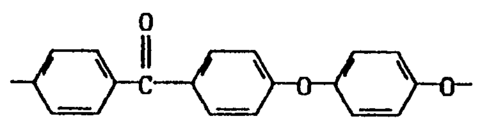 | 2,45 | 338 | 67 | hellbeige |
| 2 | 4,4'-Dichlorbenzophenon<br>4,4'-Dihydroxydiphenyl | 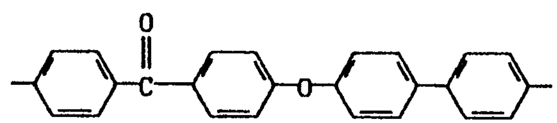 | 1,509 | 391 | 109 | beige |
| 3 | 4,4'-Dichlorbenzophenon<br>4,4'-Dihydroxydiphenyl-ether | 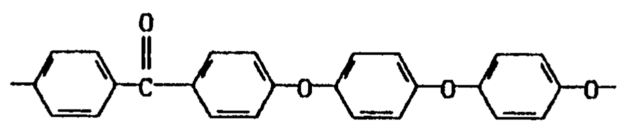 | 2,06 | 324 | 67 | ockergelb |
| 4 | 4,4'-Dichlorbenzophenon<br>4,4'-Dihydroxybenzophenon | 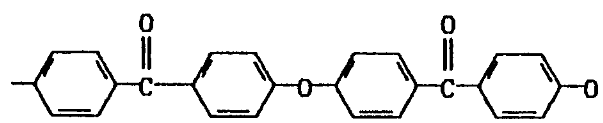 | 1,532 | 375 | 113 | weiß |

Tabelle 1 (Fortsetzung)

| Beispiel Nr. | Reaktionskomponenten | gebildete Polymerstruktur | rel. Viskosität | Schmelzpunkt °C | Schmelzenthalpie J/g | Farbe des Produktes |
|---|---|---|---|---|---|---|
| 5 | 4-Chlor-4'-hydroxybenzophenon | 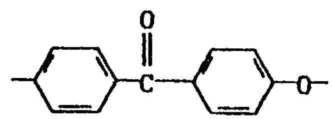 | 1,924 | 365 | 114 | gelb |
| 6 | 4-Chlor-4'-hydroxybenzophenon-Kalium-Salz | 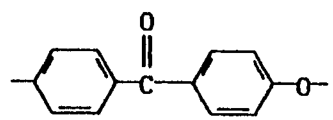 | 2,281 | 366 | 114 | gelb |
| 7 | 4,4'-Dichlorbenzophenon Hydrochinon-Kalium-Salz | 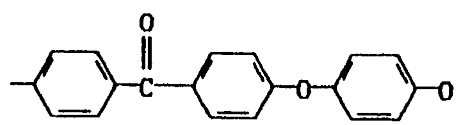 | 1,603 | 340 | 69 | beige |

## Ansprüche

1. Verfahren zur Herstellung eines hochmolekularen, kristallinen aromatischen Polyetherketons aus einer aromatischen Dihydroxiverbindung und einer aromatischen Dihalogenverbindung, welche eine Ketogruppe enthält, dadurch gekennzeichnet, daß N-$C_1$-$C_5$-Alkylcaprolactame als Lösungsmittel und ein Gemisch von Alkaliverbindungen, bestehend aus mindestens einem Alkalicarbonat und mindestens einer Verbindung aus der Gruppe der Alkali-Hydroxide, -Hydrogencarbonate, -Fluoride, -Hydride, -Alkoxide und Alkylate verwendet wird.

2. Verfahren nach Anspruch 1, dadurch gekennzeichnet, daß Mischungen von Kaliumcarbonat mit Kaliumhydrogencarbonat oder -Hydroxid verwendet werden.

3. Verfahren nach Anspruch 1, dadurch gekennzeichnet, daß aromatische Monohydroxymonohalogenverbindungen der Formel (I)
HO - Ar - X (I),
in welcher
X für Halogen wie Chlor steht,
X und OH in ortho- oder para-Position am jeweils letzten aromatischen Rest stehen,
eingesetzt werden.

4. Verfahren nach Anspruch 1, dadurch gekennzeichnet, daß aromatische Dihalogenverbindungen der Formel (II)
X - Ar - X (II),
in welcher
Ar für $C_{6-30}$-Arylen steht, welcher mindestens eine Ketogruppe enthält und
X für Cl in ortho- oder para-Position an dem jeweils letzten aromatischen Kern steht,
eingesetzt werden.